# EUROPEAN PATENT APPLICATION

(11) **EP 4 826 539 A2**
(43) Date of publication of application: **21.10.2026**
(21) Application number: 26197775.5
(22) Date of filing: 11.08.2026
(51) Int. Cl.: G06F 9/50, G06F 9/4401, G06F 21/57

(54) **PROCESSOR SCHEDULING METHOD AND APPARATUS, AND ELECTRONIC DEVICE**

(71) Applicant: XG TECH PTE. LTD., Singapore 179098 (SG)
(72) Inventor: YAN, Xiaofeng, Singapore 179098 (SG); LIN, Tao, Singapore 179098 (SG); WU, Xuxu, Singapore 179098 (SG); XU, Zuo, Singapore 179098 (SG)
(74) Representative: Patentanwälte Magenbauer & Kollegen Partnerschaft mbB

(57) **Abstract**

Disclosed are a processor scheduling method and apparatus, and an electronic device. In response to a first operating system being started, running configuration information corresponding to an integrated circuit is obtained, where the running configuration information includes correspondence relationships between a plurality of processors and a plurality of operating systems, and the correspondence relationships are determined based on functional safety levels respectively corresponding to the plurality of processors and respective functional safety level requirements of the plurality of operating systems; based on the correspondence relationships, at least one first processor corresponding to the first operating system is determined from the plurality of processors; and the first processor is scheduled to the first operating system, so that processor resources can be reasonably allocated according to the functional safety level requirements of the operating systems.

## Description

### TECHNICAL FIELD

The present disclosure relates to the technical field of integrated circuits, and in particular, to a processor scheduling method and apparatus, and an electronic device.

### BACKGROUND

At present, a vehicle may run different operating systems through an integrated circuit, so as to implement various assisted-driving functions, such as adaptive cruise control, lane keeping, and automatic emergency braking. The integrated circuit may include a plurality of processors, which can provide computing-power resources for the integrated circuit when the integrated circuit runs the operating systems.

However, different operating systems have different functional safety level requirements, and when the integrated circuit is operating, the computing-power resources of the processors cannot be allocated according to the functional safety level requirements of the operating systems, which reduces allocation rationality of the computing-power resources of the processors.

### SUMMARY

To resolve the foregoing technical problem, the present disclosure provides a processor scheduling method and apparatus, and an electronic device, so as to resolve the problem in the prior art that an integrated circuit is unable to reasonably allocate computing-power resources of processors according to functional safety level requirements of operating systems.

According to a first aspect of the present disclosure, there is provided a processor scheduling method, applied to an integrated circuit, the integrated circuit being configured to run a plurality of operating systems and including a plurality of processors that have an identical processor architecture, wherein the method includes:
in response to a first operating system being started, obtaining running configuration information corresponding to the integrated circuit, wherein the first operating system is any one of the plurality of operating systems, and the running configuration information includes correspondence relationships between the plurality of processors and the plurality of operating systems, the correspondence relationships being determined based on functional safety levels respectively corresponding to the plurality of processors and respective functional safety level requirements of the plurality of operating systems; determining, based on the correspondence relationships between the plurality of processors and the plurality of operating systems, at least one first processor corresponding to the first operating system from the plurality of processors; and scheduling the at least one first processor to the first operating system.

According to a second aspect of the present disclosure, there is provided a processor scheduling apparatus, applied to an integrated circuit, the integrated circuit being configured to run a plurality of operating systems and including a plurality of processors that have an identical processor architecture, wherein the apparatus includes:

an obtaining module, configured to, in response to a first operating system being started, obtain running configuration information corresponding to the integrated circuit, wherein the first operating system is any one of the plurality of operating systems, and the running configuration information includes correspondence relationships between the plurality of processors and the plurality of operating systems, the correspondence relationships being determined based on functional safety levels respectively corresponding to the plurality of processors and respective functional safety level requirements of the plurality of operating systems; a determining module, configured to determine, based on the correspondence relationships between the plurality of processors and the plurality of operating systems, at least one first processor corresponding to the first operating system from the plurality of processors; and a scheduling module, configured to schedule the at least one first processor to the first operating system.

According to a third aspect of the present disclosure, there is provided a computer readable storage medium. The storage medium stores a computer program, and the computer program is used for executing the processor scheduling method according to embodiments in the first aspect of the present disclosure.

According to a fourth aspect of the present disclosure, there is provided an electronic device, including: a processor; and a memory, configured to store instructions executable by the processor, wherein the processor is configured to read the executable instructions from the memory, and execute the instructions to implement the processor scheduling method according to the embodiments in the first aspect of the present disclosure.

According to the processor scheduling method and apparatus, and the electronic device that are provided in the embodiments of the present disclosure, in response to the first operating system being started, by obtaining the running configuration information corresponding to the integrated circuit, a processor with a functional safety level matching the functional safety level requirement of the operating system can be scheduled to the first operating system based on the correspondence relationships between the plurality of processors and the plurality of operating systems, so that processor resources can be reasonably allocated according to the functional safety level requirements of different operating systems, thereby improving allocation rationality of computing-power resources of the processors in the integrated circuit. Meanwhile, dynamic migration of the processors between the operating systems in different scenarios can also be supported, thereby effectively improving utilization efficiency of computing-power resources of a chip.

### BRIEF DESCRIPTION OF THE DRAWINGS

FIG. 1 is a schematic diagram of a hardware architecture of an integrated circuit according to an exemplary embodiment of the present disclosure;
FIG. 2 is a schematic flowchart of a processor scheduling method according to an exemplary embodiment of the present disclosure;
FIG. 3 is a schematic flowchart of dynamic migration of a processor according to an exemplary embodiment of the present disclosure;
FIG. 4 is a detailed schematic flowchart of step S260 according to an exemplary embodiment of the present disclosure;
FIG. 5 is a detailed schematic flowchart of step S262 according to an exemplary embodiment of the present disclosure;
FIG. 6 is a detailed schematic flowchart following S2622 according to an exemplary embodiment of the present disclosure;
FIG. 7 is a detailed flowchart of one embodiment of step S2623 according to an exemplary embodiment of the present disclosure;
FIG. 8 is a detailed flowchart of another embodiment of step S2623 according to an exemplary embodiment of the present disclosure;
FIG. 9 is a diagram of a structure of a processor scheduling apparatus according to an exemplary embodiment of the present disclosure; and
FIG. 10 is a diagram of a structure of an electronic device according to an exemplary embodiment of the present disclosure.

### DETAILED DESCRIPTION OF THE EMBODIMENTS

To explain the present disclosure, exemplary embodiments of the present disclosure are described below in detail with reference to accompanying drawings. Obviously, the embodiments described are merely some, rather than all of embodiments of the present disclosure. It should be understood that the present disclosure is not limited by the exemplary embodiments.

It should be noted that, unless otherwise specifically stated, the relative arrangement of components and steps, numerical expressions, and numerical values set forth in these embodiments do not limit the scope of the present disclosure.

### Application overview

With rapid development of automotive intelligence technologies, a cockpit-driving-integrated integrated circuit needs to simultaneously run a plurality of operating systems, including a cockpit operating system (in-vehicle infotainment operating system, IVI OS), an intelligent-driving operating system (advanced driver assistance system operating system, ADAS OS), an instrument-cluster operating system, and the like, so as to jointly support diversified in-vehicle functions such as multimedia entertainment, navigation interaction, autonomous-driving perception and decision-making, and instrument-cluster display. The integrated circuit includes a plurality of homogeneous processors (CPU cores), which have an identical processor architecture and support an identical instruction set.

However, different operating systems have significantly different functional safety level requirements for processors. The intelligent-driving operating system directly relates to driving safety, and has the highest functional safety level requirements for the processors. The instrument-cluster operating system involves display of key driving-related information, and has intermediate functional safety level requirements. The cockpit operating system mainly runs non-safety-critical functions such as entertainment and navigation, and has relatively low functional safety level requirements.

In an existing integrated circuit, all homogeneous processors have the same functional safety level, and the integrated circuit is unable to satisfy requirements for allocating processors with different functional safety levels to different operating systems.

In view of the foregoing technical problem, the present disclosure provides a processor scheduling method and apparatus, and an electronic device, which can configure, within the same integrated circuit, a resource pool having homogeneous processors with different functional safety levels, and perform static allocation or dynamic migration on processors based on the functional safety level requirements of the operating systems in the integrated circuit, thereby implementing reasonable allocation and efficient utilization of processor resources.

### Exemplary system

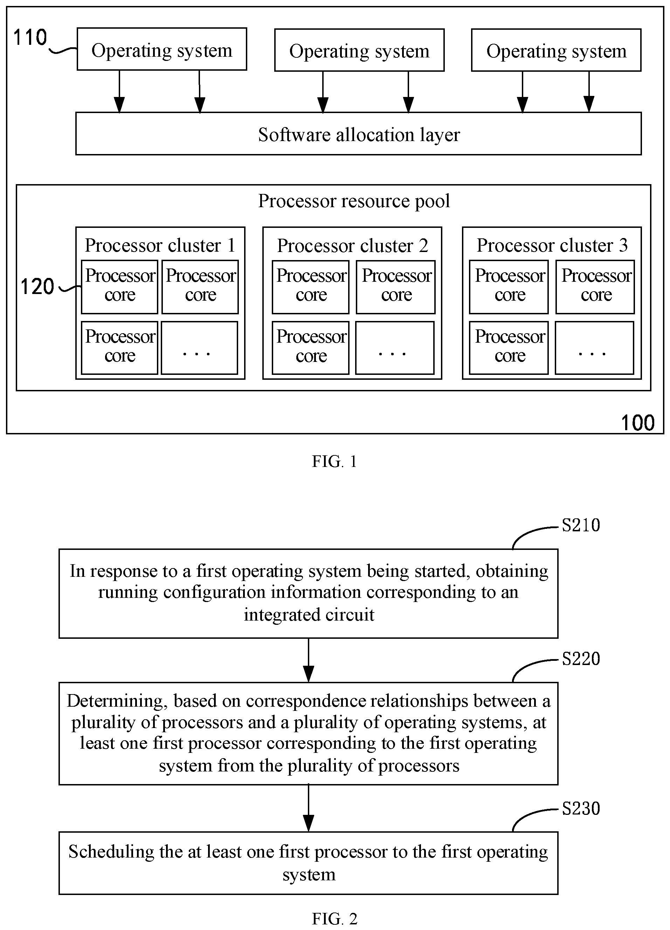

FIG. 1 is a schematic diagram of a hardware architecture of an integrated circuit according to an exemplary embodiment of the present disclosure. As shown in FIG. 1, an integrated circuit 100 may be a cockpit-driving-integrated SoC chip. The integrated circuit 100 includes a plurality of processors 120, and the plurality of processors 120 in the integrated circuit 100 constitute a processor resource pool. These processors 120 have an identical processor architecture, support an identical instruction set, and are homogeneous processors.

The plurality of processors 120 in the integrated circuit 100 may be classified into different processor clusters as required. The processors 120 in the processor resource pool are preconfigured with different functional safety levels. For example, several processors 120 (or a processor cluster) are configured with a relatively high functional safety level, several other processors 120 (or a processor cluster) are configured with a medium functional safety level, and several further processors 120 (or a processor cluster) are configured with a relatively low functional safety level.

The integrated circuit 100 maintains a software allocation layer, which is used to manage static division or dynamic migration between the plurality of processors 120 and a plurality of operating systems 110, and pre-configure and store running configuration information to specify binding correspondence relationships between operating systems having different functional safety level requirements and processors with corresponding functional safety levels. This supports both static allocation of the processors 120 during a startup phase of the integrated circuit 100, and dynamic migration and adjustment for the processors 120 between different operating systems 110 during operation of the integrated circuit 100 according to changes in computing-power requirements of the operating systems 110.

Meanwhile, the software allocation layer may receive resource requests when the operating systems are started, and complete scheduling and allocation of the corresponding processors 120 according to a preset correspondence relationship, thereby ensuring that each operating system 110 can obtain computing-power resources that meet the functional safety level requirement of this operating system 110.

To implement different functional safety levels, the integrated circuit 100 may select different protection mechanisms for the processors 120 with different functional safety levels. The protection mechanism is used to represent the functional safety level of each processor 120, where higher safety of the corresponding protection mechanism indicates a higher functional safety level of the processor 120. In embodiments of the present disclosure, the protection mechanisms may include SRAM ECC (error correcting code) protection, critical-signal parity check protection, critical-module triple modular redundancy (TMR), critical-module lock-step dual-core lock-stepping, transient fault protection (TFP), a software test library (STL), and the like.

For example, for a processor 120 with a high functional safety level, all of the foregoing protection mechanisms may be adopted; for a processor 120 with a medium functional safety level, some of the foregoing protection mechanisms may be adopted, such as the transient fault protection, the software test library, the SRAM ECC, and the critical-signal parity check protection; and for a processor 120 with a low functional safety level, basic protection mechanisms may be adopted, such as the SRAM ECC and the critical-signal parity check protection.

The integrated circuit 100 can run a plurality of operating systems 110. For example, the plurality of operating systems 110 include an intelligent-driving operating system, an instrument-cluster operating system, and a cockpit operating system.

### Exemplary method

FIG. 2 is a schematic flowchart of a processor scheduling method according to an exemplary embodiment of the present disclosure. This embodiment may be applied to an integrated circuit. The integrated circuit is configured to run a plurality of operating systems, and includes a plurality of processors that have an identical processor architecture. As shown in FIG. 2, the foregoing method includes the following steps.

S210: In response to a first operating system being started, obtaining running configuration information corresponding to an integrated circuit.

The first operating system is any one of the plurality of operating systems. When responding to a startup request initiated by the first operating system, the integrated circuit may read pre-stored running configuration information in response to the startup request.

The running configuration information includes correspondence relationships between the plurality of processors and the plurality of operating systems, and the correspondence relationships are predetermined based on functional safety levels respectively corresponding to the plurality of processors and respective functional safety level requirements of the plurality of operating systems.

Specifically, the running configuration information is pre-stored in the integrated circuit in a device tree (device tree source, DTS) format. DTS is a data structure that represents configuration of a hardware platform. In this embodiment of the present disclosure, the running configuration information contains information such as a list of processors corresponding to each operating system, the functional safety levels of the processors, binding relationships between the processors and the operating systems, and functional safety level requirement parameters of the operating systems.

In some examples, the integrated circuit may perform virtualization on the processors to convert the processors into schedulable computing-power resource nodes, wherein allocation and migration of these nodes are uniformly managed by a software allocation layer. Computing-power resources between different operating systems are isolated through virtualization, so as to avoid mutual interference between tasks with different safety levels, thereby ensuring operational independence and safety of the operating systems.

In some examples, the processors corresponding to each operating system may all be processors with the same functional safety level, or may include processors with different functional safety levels. For example, five processors corresponding to an intelligent-driving operating system may include four processors with a high functional safety level and one processor with a medium functional safety level, so as to satisfy functional safety level requirements of different functional modules in the intelligent-driving operating system. In this case, while ensuring safety of core functions, processor resources are reasonably utilized, thereby avoiding wastes of resources of the processors with a high safety level.

In some examples, when the integrated circuit is powered on and started, the pre-stored running configuration information may be parsed from a DTS file and stored into a memory of the integrated circuit, so that the integrated circuit can quickly obtain this information during subsequent operation. When the startup request is initiated by the first operating system, the integrated circuit may, in response to the startup request, directly obtain the running configuration information from the memory without re-parsing the DTS file, thereby improving efficiency of the static allocation of the processors.

S220: Determining, based on correspondence relationships between a plurality of processors and a plurality of operating systems, at least one first processor corresponding to the first operating system from the plurality of processors.

The integrated circuit may search the processor resource pool for processors corresponding to the first operating system based on the correspondence relationships recorded in the running configuration information, to determine the at least one first processor. The functional safety level of the first processor matches the functional safety level requirement of the first operating system, being capable of supporting safe operation of the first operating system.

In some examples, when determining the first processor, the integrated circuit first obtains the functional safety level requirement corresponding to the first operating system from the running configuration information; and then, filters, in the processor resource pool based on the correspondence relationships between the plurality of processors and the plurality of operating systems, the first processor whose functional safety level matches this functional safety level requirement.

For example, if the first operating system is the intelligent-driving operating system, and the functional safety level requirement thereof is at an ASIL-D level, the integrated circuit may filter all ASIL-D-level processors from the processor resource pool to serve as candidate first processors. If the first operating system is an instrument-cluster operating system, and the functional safety level requirement thereof is at an ASIL-B level, the integrated circuit may filter ASIL-B-level processors from the processor resource pool to serve as candidate first processors. If the first operating system is a cockpit operating system, and the functional safety level requirement thereof is at a QM level, the integrated circuit may filter QM-level processors from the processor resource pool to serve as candidate first processors.

It should be noted that the embodiments of the present disclosure are exemplarily described only with reference to the intelligent-driving operating system, the instrument-cluster operating system, and the cockpit operating system, and do not limit types of the operating systems in the present disclosure. Any operating systems having different functional safety level requirements may fall within the protection scope of the present disclosure.

S230: Scheduling the at least one first processor to the first operating system.

The integrated circuit allocates the determined at least one first processor to the first operating system for use, so that the first operating system can run on a processor whose functional safety level matches the requirement of the first operating system. Specifically, the integrated circuit may perform initialization configuration on the first processor through the software allocation layer, for example, configure the first processor with memory access permission and an interrupt routing rule corresponding to the first operating system, so that the first processor can access a memory address space of the first operating system, thereby facilitating subsequent execution of system tasks corresponding to the first operating system.

In this way, the integrated circuit may complete the static allocation of the processors during a startup phase of an operating system, so as to ensure that each started operating system can obtain processor resources matching the functional safety level requirement of this started operating system, which not only satisfies the functional safety level requirements of different operating systems, but can also implement reasonable allocation of resources of homogeneous processors, thereby improving allocation efficiency and rationality of the processor resources.

In some examples, after scheduling the first processor to the first operating system, the integrated circuit synchronously updates an allocation state of the first processor in the processor resource pool, marks the processor allocated to the first operating system as "occupied", and records a quantity and functional safety level information of the allocated processors. When another operating system is subsequently started, the integrated circuit performs filtering and allocation only from processors in an "idle" state, so as to prevent the same processor from being repeatedly allocated to a plurality of operating systems, thereby ensuring processor resource isolation between the operating systems.

According to the method provided in the embodiments of the present disclosure, when the first operating system is started, the running configuration information can be obtained, and the first processor matching the functional safety level requirement of the first operating system can be scheduled to the corresponding operating system based on the correspondence relationships between the plurality of processors and the plurality of operating systems, so that the processor resources are reasonably allocated according to the functional safety level requirements of different operating systems, thereby improving allocation rationality of computing-power resources of the processors in the integrated circuit.

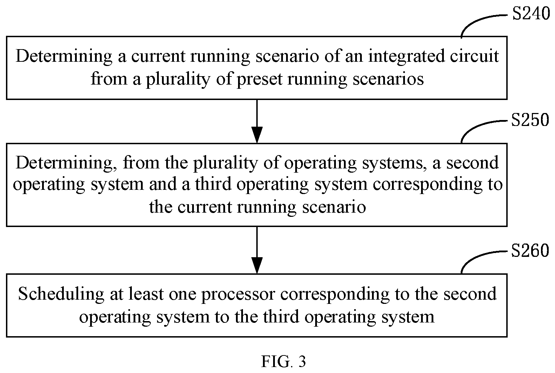

FIG. 3 is a schematic flowchart of dynamic migration of a processor according to an exemplary embodiment of the present disclosure. Referring to FIG. 3, on the basis of the embodiment shown in FIG. 2, after the at least one first processor is scheduled to the first operating system, the integrated circuit may further dynamically adjust the allocation of the processors between different operating systems based on a current running scenario. Based on this, after step S230, the method may include the following steps.

S240: Determining a current running scenario of the integrated circuit from a plurality of preset running scenarios.

The preset running scenarios may include scenarios corresponding to different vehicle operating states, such as a parking scenario, a low-speed driving scenario, and a high-speed driving scenario. In the embodiments of the present disclosure, under different running scenarios, computing-power requirements and functional safety level requirements of the operating systems for the processor resources differ. The integrated circuit may collect current operating state data of a vehicle through an in-vehicle sensor and a vehicle body control system, and determine the current running scenario of the integrated circuit from the plurality of preset running scenarios based on the operating state data.

For example, when the vehicle is in a parked but not switched-off state, the in-vehicle sensor detects that a vehicle speed is zero and a parking brake is in a working state. In other words, the current running scenario may be determined as the parking scenario. When the vehicle speed is lower than a first preset threshold, for example, lower than 40 km/h, and the vehicle is not parked, it is determined that the current running scenario is the low-speed driving scenario. When the vehicle speed is higher than a second preset threshold, for example, higher than 60 km/h, it is determined that the current running scenario is the high-speed driving scenario.

S250: Determining, from the plurality of operating systems, a second operating system and a third operating system corresponding to the current running scenario.

In some examples, under different running scenarios, the processor resources required by each operating system differ, and the integrated circuit may dynamically adjust the allocation of the processors between different operating systems based on the current running scenario.

Under the current running scenario, the integrated circuit may determine the second operating system and the third operating system from the plurality of operating systems. The second operating system is an operating system for which corresponding processors can be reduced, and the third operating system is an operating system for which corresponding processors are increased.

For example, taking the intelligent-driving operating system and the cockpit operating system as an example, in a case where the current running scenario is the parking scenario, the intelligent-driving operating system does not need to continuously perform complex environmental perception and path planning, and has reduced computing-power requirements for processors. In this case, the corresponding processors may be reduced. Therefore, the intelligent-driving operating system may be determined as the second operating system. Meanwhile, the cockpit operating system needs to run high-load applications such as multimedia entertainment and navigation interaction, and has increased computing-power requirements for processors. In this case, the corresponding processors need to be increased. Therefore, the cockpit operating system may be determined as the third operating system.

In a case where the current running scenario is the high-speed driving scenario, the intelligent-driving operating system needs to continuously perform high-computing-power tasks such as environmental perception, path planning, and vehicle control, and has highest requirements for both functional safety levels and computing-power of the processors. In this case, the corresponding processors need to be increased. Therefore, the intelligent-driving operating system may be determined as the third operating system. Meanwhile, computing-power requirements of the cockpit operating system are relatively reduced, and the corresponding processors may be reduced. Therefore, the cockpit operating system may be determined as the second operating system.

S260: Scheduling at least one processor corresponding to the second operating system to the third operating system.

After determining the second operating system and the third operating system, the integrated circuit may schedule, through the software allocation layer, the at least one processor of the second operating system to the third operating system.

For example, in a case where the current running scenario is the parking scenario, the intelligent-driving operating system is the second operating system, the cockpit operating system is the third operating system, and the integrated circuit may schedule the at least one processor corresponding to the intelligent-driving operating system to the cockpit operating system for use.

For another example, in a case where the current running scenario is the high-speed driving scenario, the cockpit operating system is the second operating system, the intelligent-driving operating system is the third operating system, and the integrated circuit may schedule the at least one processor corresponding to the cockpit operating system to the intelligent-driving operating system for use.

In some examples, before releasing a processor, the integrated circuit may transfer, through the second operating system, a system task currently run on the to-be-scheduled processor to another processor corresponding to the second operating system, to ensure normal running of the system task of the second operating system. Subsequently, the integrated circuit performs scheduling configuration on the to-be-migrated processor through the software allocation layer, for example, switch memory access permission and an interrupt routing rule of the second operating system corresponding to the to-be-migrated processor to memory access permission and an interrupt routing rule of the third operating system, so that the to-be-migrated processor can access a memory address space of the third operating system after being scheduled to the third operating system, thereby facilitating subsequent execution of a system task corresponding to the third operating system.

In some embodiments, when the running scenario is switched, the integrated circuit automatically identifies changes in the current running scenario by detecting information such as vehicle-speed sensor data, a parking-state signal, and a driving-mode selection signal, and triggers a corresponding dynamic processor scheduling process. Taking the current running scenario switching from the high-speed driving scenario to the parking scenario as an example, under the high-speed driving scenario, the processor corresponding to the cockpit operating system is scheduled to the intelligent-driving operating system for use. After the current running scenario is switched from the high-speed driving scenario to the parking scenario, the intelligent-driving operating system disables high-computing-power tasks such as environmental perception, path planning, and vehicle control, with reduced requirements for processors. In this case, the cockpit operating system needs to run high-load applications such as multimedia entertainment and navigation interaction, with increased requirements for processors. In this case, the integrated circuit may recall, to the cockpit operating system, a processor that is scheduled from the cockpit operating system to the intelligent-driving operating system in the high-speed driving scenario; and meanwhile, determine, from the processors originally corresponding to the intelligent-driving operating system, a processor that needs to be scheduled to the cockpit operating system, so as to schedule this to-be-scheduled processor to the cockpit operating system for use.

It should be noted that the integrated circuit may flexibly perform the foregoing dynamic adjustment process according to switching between different scenarios, so as to flexibly schedule the processor resources according to an actual running scenario between a plurality of operating systems including the cockpit operating system, the instrument-cluster operating system, and the intelligent-driving operating system, thereby improving allocation rationality of the processor resources. The present disclosure is exemplarily described only with reference to one-way switching between two of the foregoing scenarios, which does not specifically limit scenario-switching situations of the embodiments. According to the embodiments of the present disclosure, two-way switching between two or more scenarios may also be implemented according to actual scenario-switching requirements of the integrated circuit, all of which may be implemented with reference to the manners in the foregoing disclosed embodiments.

According to the method provided in the embodiments of the present disclosure, the processor allocation between different operating systems can be dynamically adjusted according to changes in the computing-power requirements of the operating systems under different running scenarios. In this way, on a premise of ensuring the functional safety level requirements of the operating systems, a resource utilization rate of a plurality of homogeneous processors is improved, so as to avoid a problem that the processor resources are idle and wasted under the static allocation, so that the computing-power resources of the processors can adapt to current actual running requirements, thereby improving the allocation rationality of the processor resources under different running scenarios.

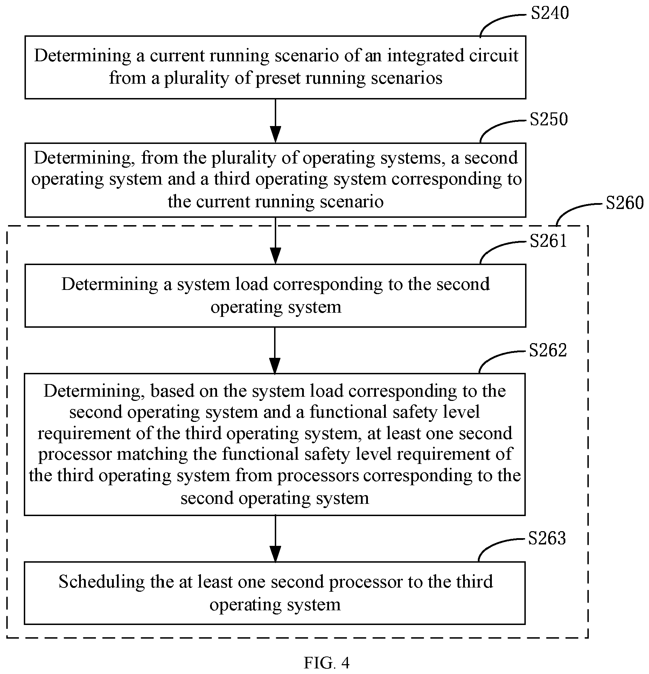

FIG. 4 is a detailed schematic flowchart of step S260 according to an exemplary embodiment of the present disclosure.

As shown in FIG. 4, on the basis of the embodiments shown in FIG. 3, step S260 may include the following steps.

S261: Determining a system load corresponding to the second operating system.

The system load is a total computing-power occupancy ratio of the processors corresponding to the second operating system under the current running scenario. The integrated circuit calculates the total computing-power occupancy ratio of the second operating system, that is, the system load, by monitoring real-time computing-power utilization rates of all processors in the second operating system and summing the computing-power utilization rates of the processors.

In a specific implementation, the integrated circuit may periodically collect system loads of the operating systems through a system control processor, and a collection period may be configured according to response-performance requirements of the integrated circuit. For example, collection is performed every 50 milliseconds or 100 milliseconds.

In another implementation, the operating systems may actively report respective system loads to the system control processor of the integrated circuit. For example, when a certain operating system detects that the own system load is below a preset threshold for a long period of time (for example, for three consecutive collection periods), this operating system may actively send prompt information of "processor resources may be released" to the system control processor. When a certain operating system detects that the own system load is at or above a preset upper limit for a long period of time, this operating system may actively send prompt information of "more processor resources are required" to the system control processor. The system control processor may adjust an allocation decision in a real-time manner according to the prompt information sent by the operating systems, thereby improving timeliness of processor scheduling.

S262: Determining, based on the system load corresponding to the second operating system and the functional safety level requirement of the third operating system, at least one second processor matching the functional safety level requirement of the third operating system from the processors corresponding to the second operating system.

When the system load corresponding to the second operating system is less than or equal to a preset first threshold, it indicates that the second operating system currently occupies less computing-power of the processors, and there are processor resources that can be released. The integrated circuit filters, from the plurality of processors corresponding to the second operating system, the second processor matching the functional safety level requirement of the third operating system, to be scheduled to the third operating system. In this way, it can be ensured that after processor transfer, the processor obtained by the third operating system satisfies the functional safety level requirement of the third operating system. To be specific, reliability of operation of the third operating system would not be affected due to an insufficient functional safety level, and there is also no need to schedule a processor with a high functional safety level to satisfy the functional safety level requirement of the third operating system, thereby avoiding a waste of resources.

S263: Scheduling the at least one second processor to the third operating system.

After determining the second processor in the second operating system, the integrated circuit may schedule the second processor to the third operating system through the software allocation layer. For an implementation process and beneficial effects of performing the scheduling, reference may be made to the foregoing embodiments, and details are not described herein.

According to the method provided in the embodiments of the present disclosure, the to-be-scheduled second processor is filtered in combination with the system load of the second operating system and the functional safety level requirement of the third operating system, so that idle processor resources of the second operating system can be released to ensure operational stability of the second operating system, and the processor obtained by the third operating system through scheduling can also be enabled to satisfy the functional safety level requirement of the third operating system, thereby further improving precision of dynamic processor scheduling and a resource utilization rate.

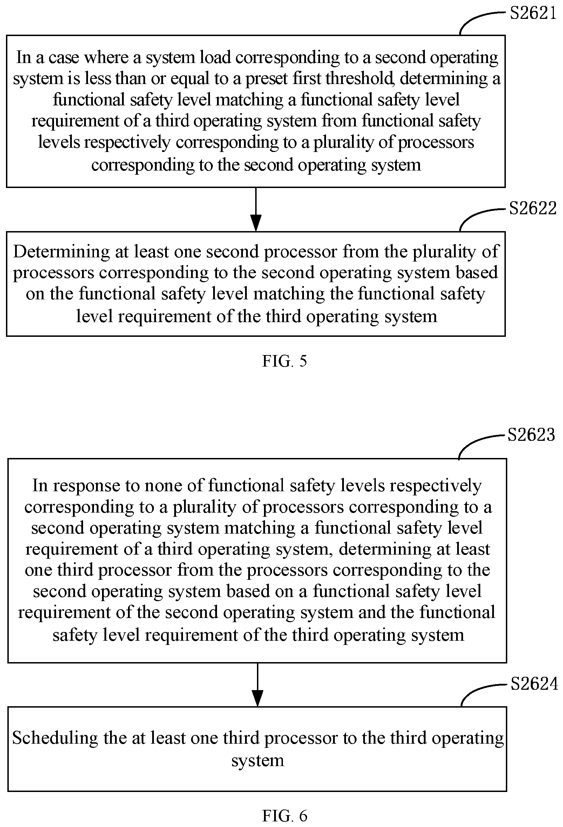

FIG. 5 is a detailed schematic flowchart of step S262 according to an exemplary embodiment of the present disclosure.

Referring to FIG. 5, on the basis of the embodiments shown in FIG. 4, step S262 may include the following steps.

S2621: In a case where the system load corresponding to the second operating system is less than or equal to a preset first threshold, determining a functional safety level matching the functional safety level requirement of the third operating system from the functional safety levels respectively corresponding to a plurality of processors corresponding to the second operating system.

In the case where the system load corresponding to the second operating system is less than or equal to the preset first threshold, the integrated circuit may determine the functional safety level requirement corresponding to the third operating system in the running configuration information. For example, if the second operating system is the intelligent-driving operating system and the third operating system is the cockpit operating system, the integrated circuit first needs to determine, in the running configuration information, the functional safety level requirement of the cockpit operating system, that is, the QM level.

The integrated circuit may determine, according to the functional safety level requirement of the third operating system, the functional safety level matching the functional safety level requirement of the third operating system from the functional safety levels respectively corresponding to the plurality of processors corresponding to the second operating system. For example, if the plurality of processors corresponding to the second operating system include a plurality of ASIL-D-level processors and one QM-level processor, and the third operating system is the cockpit operating system with a corresponding functional safety level requirement at the QM level, the integrated circuit may determine, in the second operating system, a functional safety level QM of a processor corresponding to the functional safety level requirement at the QM level.

S2622: Determining at least one second processor from the plurality of processors corresponding to the second operating system based on the functional safety level matching the functional safety level requirement of the third operating system.

After determining the functional safety level matching the functional safety level requirement of the third operating system, the integrated circuit may determine the second processor corresponding to this functional safety level from the plurality of processors corresponding to the second operating system.

For example, if the functional safety level in the intelligent-driving operating system that matches the functional safety level requirement of the cockpit operating system is the QM level, the integrated circuit may filter processors meeting QM-level requirements from available processors of the intelligent-driving operating system, and determine one or more of these processors as the to-be-scheduled second processor.

According to the method provided in the embodiments of the present disclosure, by matching the functional safety level requirement of the third operating system with the functional safety levels corresponding to the processors in the second operating system, a to-be-scheduled processor satisfying the functional safety level requirement of the third operating system is precisely filtered out. Thus, functional-safety operational requirements of the third operating system are satisfied, and resource mismatch caused by unnecessary occupation of the processors with a high safety level is also avoided, thereby improving allocation rationality of processor resources between a plurality of operating systems and operational reliability.

FIG. 6 is a detailed schematic flowchart following S2622 according to an exemplary embodiment of the present disclosure.

Referring to FIG. 6, on the basis of the embodiments shown in FIG. 5, after step S2622, the method may include the following steps.

S2623: In response to none of the functional safety levels respectively corresponding to the plurality of processors corresponding to the second operating system matching the functional safety level requirement of the third operating system, determining at least one third processor from the processors corresponding to the second operating system based on the functional safety level requirement of the second operating system and the functional safety level requirement of the third operating system.

In this embodiment, if none of the processors corresponding to the second operating system matches the functional safety level requirement of the third operating system, the integrated circuit may determine a processor with another functional safety level from the plurality of processors corresponding to the second operating system, to serve as the to-be-migrated processor, that is, the third processor.

In an example, if the second operating system is the intelligent-driving operating system and the third operating system is the cockpit operating system, when the functional safety levels of all the processors corresponding to the intelligent-driving operating system are higher than the functional safety level requirement of the cockpit operating system, the integrated circuit may filter, according to a rule that "a processor with a higher safety level can be compatible with a lower safety level requirement" a processor whose functional safety level is higher than the functional safety level requirement of the cockpit operating system from the processors corresponding to the intelligent-driving operating system, to serve as the third processor.

In another example, if the second operating system is the cockpit operating system and the third operating system is the intelligent-driving operating system, when the functional safety levels of all the processors corresponding to the cockpit operating system are lower than the functional safety level requirement of the intelligent-driving operating system, the integrated circuit may determine that some of the processors of the cockpit operating system are temporarily scheduled to the intelligent-driving operating system, so as to assist the intelligent-driving operating system in executing some system tasks with a relatively lower functional safety level, thereby saving the original processors of the intelligent-driving operating system to execute system tasks with a high functional safety level.

In some examples, when the functional safety levels of all the processors corresponding to the cockpit operating system are lower than the functional safety level requirement of the intelligent-driving operating system, the integrated circuit may also temporarily not adjust the existing processor allocation, or may perform scheduling transfer after waiting until the system load of the second operating system drops to a threshold at which a processor with a higher safety level can be released, thereby avoiding affecting operational safety of the second operating system and the third operating system.

S2624: Scheduling the at least one third processor to the third operating system.

After determining the third processor in the processors corresponding to the second operating system, the integrated circuit may schedule the third processor to the third operating system through the software allocation layer. For an implementation process and beneficial effects of performing the scheduling, reference may be made to the foregoing embodiments, and details are not described herein.

According to the method provided in the embodiments of the present disclosure, in a case where all the processors corresponding to the second operating system do not match the functional safety level requirement of the third operating system, available processors can be filtered from the processors corresponding to the second operating system based on the functional safety level requirement of the second operating system and the functional safety level requirement of the third operating system, or an appropriate scheduling time can be selected according to an actual operating state. Thus, operational requirements of the third operating system can be satisfied as possible based on existing processor resources, and operational safety of tasks with different safety levels can also be ensured to the greatest extent, thereby improving flexibility and reliability of processor resource scheduling.

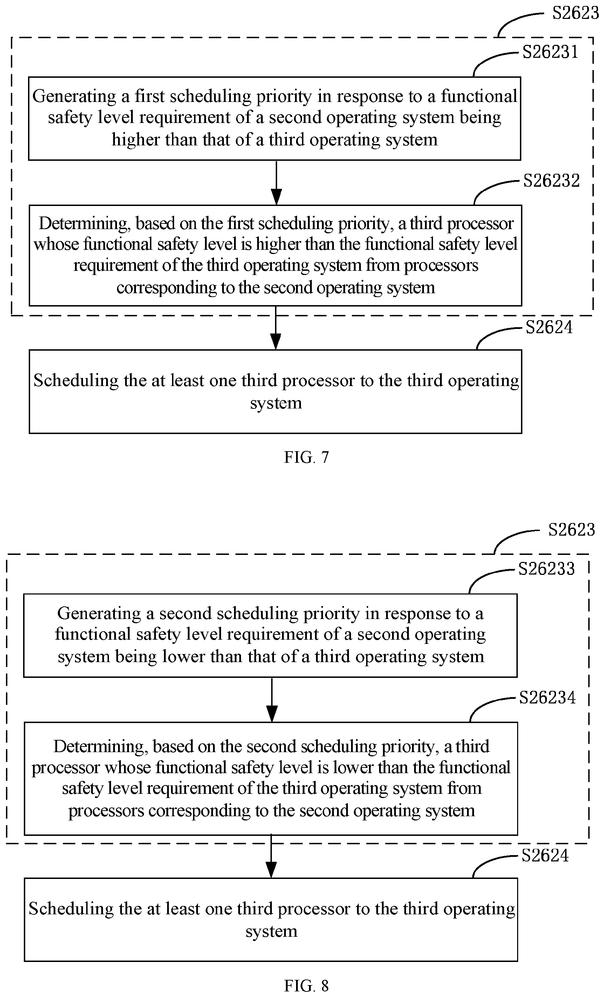

FIG. 7 is a detailed flowchart of one embodiment of step S2623 according to an exemplary embodiment of the present disclosure.

Referring to FIG. 7, on the basis of the embodiments shown in FIG. 6, step S2623 may include the following steps.

S26231: Generating a first scheduling priority in response to the functional safety level requirement of the second operating system being higher than that of the third operating system.

When there is no processor with a functional safety level matching the functional safety level requirement of the third operating system in the second operating system, the integrated circuit may respectively obtain the functional safety level requirement of the second operating system and the functional safety level requirement of the third operating system by reading the running configuration information, and compare the two functional safety level requirements.

In the case where the functional safety level requirement of the second operating system is higher than that of the third operating system, the integrated circuit may determine the to-be-migrated processor from the plurality of processors corresponding to the second operating system in an ascending order of functional safety levels, so as to retain original safety of the second operating system to the greatest extent while satisfying the functional safety level requirement of the third operating system.

Processors with functional safety levels lower than the functional safety level requirement of the third operating system need to be filtered out from the plurality of processors corresponding to the second operating system. In other words, it is determined that a range for determining the to-be-migrated processor does not include the processors with functional safety levels lower than the functional safety level requirement of the third operating system.

Based on this, the integrated circuit may generate the first scheduling priority, which is used to indicate scheduling of a processor, in the second operating system, that has a functional safety level higher than the functional safety level requirement of the third operating system in an ascending order of functional safety levels.

S26232: Determining, based on the first scheduling priority, a third processor whose functional safety level is higher than the functional safety level requirement of the third operating system from the processors corresponding to the second operating system.

The integrated circuit may select, in the second operating system based on the first scheduling priority, a processor whose functional safety level is merely higher than the functional safety level requirement of the third operating system and has a smallest level difference from the functional safety level requirement of the third operating system, to serve as the third processor. For example, the second operating system is the intelligent-driving operating system, corresponding to three ASIL-D-level processors and one ASIL-B-level processor; and the third operating system is the cockpit operating system with a corresponding functional safety level requirement at the QM level. In this case, among the plurality of processors corresponding to the intelligent-driving operating system, there is no second processor matching the QM level. Moreover, since the functional safety level requirement of the intelligent-driving operating system is higher than that of the cockpit operating system, and the integrated circuit may use a processor corresponding to the intelligent-driving operating system and having a smallest level difference from the functional safety level requirement of the cockpit operating system, that is, the ASIL-B-level processor, as the third processor. The functional safety level of the ASIL-B-level processor is higher than the functional safety level requirement of the cockpit operating system, being able to satisfy operational safety of the cockpit operating system, thereby improving rationality of processor resource scheduling.

In another example, if the ASIL-B-level processor corresponding to the intelligent-driving operating system has already been scheduled to another operating system for use, the integrated circuit may use one of the three ASIL-D-level processors as the third processor.

According to the method provided in the embodiments of the present disclosure, a processor that satisfies the functional safety level requirement of the third operating system and has a smallest safety level difference can be preferentially scheduled according to the first scheduling priority, so that processors with higher safety levels can be retained as possible for use by operating systems with high safety-level requirements, thereby preventing the processors with high safety levels from being occupied by a low-requirement task. Moreover, on a premise of satisfying the functional safety level requirement of the third operating system, the allocation rationality of the processor resources is further optimized and reliability of overall operation of the plurality of operating systems is improved.

FIG. 8 is a detailed flowchart of another embodiment of step S2623 according to an exemplary embodiment of the present disclosure.

Referring to FIG. 8, on the basis of the embodiments shown in FIG. 6, step S2623 may include the following steps.

S26233: Generating a second scheduling priority in response to the functional safety level requirement of the second operating system being lower than that of the third operating system.

In the case where the functional safety level requirement of the second operating system is lower than that of the third operating system, the integrated circuit may determine the to-be-migrated processor from the plurality of processors of the second operating system in a descending order of functional safety levels, so as to support, to the greatest extent, the operation of the third operating system with a higher functional safety level requirement.

Based on this, the integrated circuit may generate the second scheduling priority, which is used to indicate scheduling of a processor, in the second operating system, that has a functional safety level lower than the functional safety level requirement of the third operating system in a descending order of functional safety levels.

S26234: Determining, based on the second scheduling priority, a third processor whose functional safety level is lower than the functional safety level requirement of the third operating system from the processors corresponding to the second operating system.

The integrated circuit may select, in the second operating system based on the second scheduling priority, a processor whose functional safety level is merely lower than the functional safety level requirement of the third operating system and has a smallest level difference from the functional safety level requirement of the third operating system, to serve as the third processor. For example, the second operating system is the cockpit operating system, corresponding to three QM-level processors and one ASIL-B-level processor; and the third operating system is the intelligent-driving operating system with a corresponding functional safety level requirement at the ASIL-D level. In this case, among the plurality of processors corresponding to the cockpit operating system, there is no second processor matching the ASIL-D level. Moreover, since the functional safety level requirement of the cockpit operating system is lower than that of the intelligent-driving operating system, the integrated circuit may use a processor corresponding to the cockpit operating system and having a smallest level difference from the functional safety level requirement of the intelligent-driving operating system, that is, the ASIL-B-level processor, as the third processor. The functional safety level of the ASIL-B-level processor is second only to the functional safety level requirement of the intelligent-driving operating system, so that the second operating system can support, to the greatest extent thereof, the intelligent-driving operating system in executing high-safety system tasks in a case of ensuring normal running of the system tasks or discarding a part of safety of the second operating system to operate with a lower functional safety level requirement, so as to satisfy the safety level requirements for the processors of the operating systems with high functional safety level requirements as possible, thereby improving the rationality of processor resource scheduling.

According to the method provided in the embodiments of the present disclosure, a processor that meets a filtering condition and has a smallest functional safety level difference can be preferentially scheduled based on the second scheduling priority, so that the second operating system can output available computing-power resources to the greatest extent without affecting operational safety of original tasks of the second operating system, to support the third operating system with a high safety level requirement, thereby improving priority of the integrated circuit for operating systems with high functional safety levels.

In some examples, the integrated circuit may include a plurality of different configurations, and each of which corresponds to a piece of running configuration information. For example, the integrated circuit may include a first configuration. In the first configuration, the integrated circuit may simultaneously run the intelligent-driving operating system and the cockpit operating system. The functional safety level requirement of the intelligent-driving operating system is higher than that of the cockpit operating system. The integrated circuit may allocate the processor with a high functional safety level to the intelligent-driving operating system, allocate the processor with a low functional safety level to the cockpit operating system, establish a correspondence relationship between the intelligent-driving operating system and the processor with a high functional safety level, establish a correspondence relationship between the cockpit operating system and the processor with a low functional safety level, and then store the correspondence relationships in the running configuration information corresponding to the first configuration.

For example, the integrated circuit includes a second configuration. In the second configuration, the integrated circuit may simultaneously run the intelligent-driving operating system, the instrument-cluster operating system, and the cockpit operating system. The functional safety level requirement of the intelligent-driving operating system is higher than that of the instrument-cluster operating system, and the functional safety level requirement of the instrument-cluster operating system is higher than that of the cockpit operating system. The integrated circuit may allocate the processor with a high functional safety level to the intelligent-driving operating system, allocate the processor with a medium functional safety level to the instrument-cluster operating system, allocate the processor with a low functional safety level to the cockpit operating system, establish correspondence relationships between the three operating systems and respective corresponding processors with different functional safety levels, and store these correspondence relationships in the running configuration information corresponding to the second configuration.

For example, if the vehicle uses another independent integrated circuit to run the intelligent-driving operating system, the integrated circuit in the present disclosure includes a third configuration. In the third configuration, the integrated circuit only simultaneously runs the instrument-cluster operating system and the cockpit operating system. The functional safety level requirement of the instrument-cluster operating system is higher than that of the cockpit operating system. The integrated circuit may allocate the corresponding processor with a high functional safety level to the instrument-cluster operating system, allocate the processor with a low functional safety level to the cockpit operating system, establish correspondence relationships between the two operating systems and processors with corresponding functional safety levels, and store these correspondence relationships in the running configuration information corresponding to the third configuration.

According to the method provided in the embodiments of the present disclosure, by presetting different pieces of running configuration information, the integrated circuit is enabled to directly invoke, according to combination of currently actually running operating systems, the processors of corresponding configurations to complete scheduling, without re-performing allocation calculations each time according to the functional safety level requirements. In this case, while satisfying the operational requirements of a plurality of operating systems in different scenarios, a computational load of dynamic scheduling is reduced and response efficiency of processor scheduling is improved.

### Exemplary apparatus

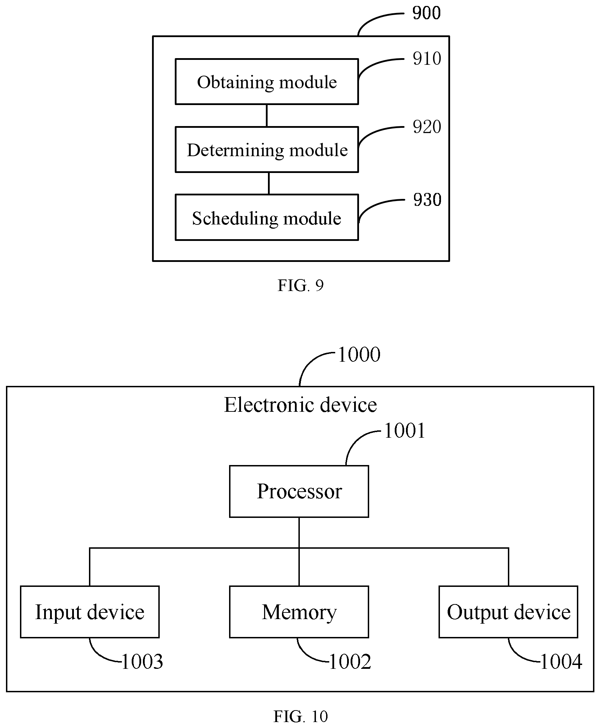

FIG. 9 is a diagram of a structure of a processor scheduling apparatus according to an exemplary embodiment of the present disclosure. The apparatus is applied to an integrated circuit. The integrated circuit is configured to run a plurality of operating systems, and includes a plurality of processors that have an identical processor architecture. The processor scheduling apparatus may be configured to implement the corresponding method embodiments of the present disclosure.

As shown in FIG. 9, the scheduling apparatus provided in the present disclosure includes an obtaining module 910, a determining module 920, and a scheduling module 930. The obtaining module 910 is configured to, in response to a first operating system being started, obtain running configuration information corresponding to the integrated circuit, where the first operating system is any one of the plurality of operating systems, and the running configuration information includes correspondence relationships between the plurality of processors and the plurality of operating systems, the correspondence relationships being determined based on functional safety levels respectively corresponding to the plurality of processors and respective functional safety level requirements of the plurality of operating systems. The determining module 920 is configured to determine, based on the correspondence relationships between the plurality of processors and the plurality of operating systems, at least one first processor corresponding to the first operating system from the plurality of processors. The scheduling module 930 is configured to schedule the at least one first processor to the first operating system.

In some examples, the determining module 920 is further configured to determine a current running scenario of the integrated circuit from a plurality of preset running scenarios; and determine, from the plurality of operating systems, a second operating system and a third operating system corresponding to the current running scenario, where the second operating system is an operating system for which corresponding processors can be reduced, and the third operating system is an operating system for which corresponding processors are increased. The scheduling module 930 is further configured to schedule at least one processor corresponding to the second operating system to the third operating system.

In some examples, the determining module 920 is configured to determine a system load corresponding to the second operating system, wherein the system load is a total computing-power occupancy ratio of the processors corresponding to the second operating system under the current running scenario; and determine, based on the system load corresponding to the second operating system and the functional safety level requirement of the third operating system, at least one second processor matching the functional safety level requirement of the third operating system from the processors corresponding to the second operating system. The scheduling module 930 is configured to schedule the at least one second processor to the third operating system.

In some examples, the determining module 920 is configured to, in a case where the system load corresponding to the second operating system is less than or equal to a preset first threshold, determine a functional safety level matching the functional safety level requirement of the third operating system from the functional safety levels respectively corresponding to a plurality of processors corresponding to the second operating system; and determine at least one second processor from the plurality of processors corresponding to the second operating system based on the functional safety level matching the functional safety level requirement of the third operating system.

In some examples, the determining module 920 is configured to, in response to none of the functional safety levels respectively corresponding to the plurality of processors corresponding to the second operating system matching the functional safety level requirement of the third operating system, determine at least one third processor from the processors corresponding to the second operating system based on the functional safety level requirement of the second operating system and the functional safety level requirement of the third operating system. The scheduling module 930 is configured to schedule the at least one third processor to the third operating system.

In some examples, the determining module 920 is configured to generate a first scheduling priority in response to the functional safety level requirement of the second operating system being higher than that of the third operating system, wherein the first scheduling priority is used to indicate scheduling of a processor, in the second operating system, that has a functional safety level higher than the functional safety level requirement of the third operating system in an ascending order of functional safety levels; and determine, based on the first scheduling priority, a third processor whose functional safety level is higher than the functional safety level requirement of the third operating system from the processors corresponding to the second operating system.

In some examples, the determining module 920 is configured to generate a second scheduling priority in response to the functional safety level requirement of the second operating system being lower than that of the third operating system, wherein the second scheduling priority is used to indicate scheduling of a processor, in the second operating system, that has a functional safety level lower than the functional safety level requirement of the third operating system in a descending order of functional safety levels; and determine, based on the second scheduling priority, a third processor whose functional safety level is lower than the functional safety level requirement of the third operating system from the processors corresponding to the second operating system.

For beneficial technical effects corresponding to the exemplary embodiments of this apparatus, reference may be made to the corresponding beneficial technical effects in the section of exemplary method described above, and details are not described herein.

### Exemplary electronic device

FIG. 10 is a diagram of a structure of an electronic device according to an exemplary embodiment of the present disclosure. As shown in FIG. 10, an electronic device 1000 includes at least one processor 1001 and a memory 1002.

The processor 1001 may be a central processing unit (CPU) or another form of processing unit having a data processing capability and/or an instruction execution capability, and may control another component in the electronic device 1000 to perform a desired function.

The memory 1002 may include one or more computer program products, which may include various forms of computer readable storage media, such as a volatile memory and/or a non-volatile memory. The volatile memory may include, for example, a random access memory (RAM) and/or a cache. The non-volatile memory may include, for example, a read-only memory (ROM), a hard disk, or a flash memory. One or more computer program instructions may be stored on the computer readable storage medium. The processor 1001 may run the one or more computer program instructions to implement the processor resource scheduling method according to various embodiments of the present disclosure that are described above and/or other desired functions.

In an example, the electronic device 1000 may further include an input device 1003 and an output device 1004. These components are interconnected through a bus system and/or other forms of connection mechanisms (not shown).

The input device 1003 may further include, for example, a keyboard or a mouse.

The output device 1004 may output various information to the outside, and may include, for example, a display, a speaker, a printer, a communication network, and a remote output device connected to the communication network.

Certainly, for simplicity, FIG. 10 shows only some of the components in the electronic device 1000 that are related to the present disclosure, and components such as a bus and an input/output interface are omitted. In addition, according to specific applications, the electronic device 1000 may also include any other appropriate components.

### Exemplary computer program product and computer readable storage medium

In addition to the foregoing method and device, embodiments of the present disclosure may also provide a computer program product including computer program instructions that, when run by a processor, cause the processor to perform the steps, of the processor scheduling method according to the embodiments of the present disclosure, that are described in the "Exemplary method" section described above.

The computer program product may be program code, written with one or any combination of a plurality of programming languages, that is configured to perform the operations in the embodiments of the present disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of the present disclosure may further relate to a computer readable storage medium, on which computer program instructions are stored. The computer program instructions, when run by the processor, cause the processor to perform the steps, of the processor scheduling method according to the embodiments of the present disclosure, that are described in the "Exemplary method" section described above.

The computer readable storage medium may be one readable medium or any combination of a plurality of readable media. The readable medium may be a readable signal medium or a readable storage medium. The readable storage medium includes, for example but is not limited to electrical, magnetic, optical, electromagnetic, infrared, or semiconductor systems, apparatuses, or devices, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disc read-only memory (CD-ROM), an optical storage device, a magnetic storage device, or any suitable combination of the above.

Basic principles of the present disclosure are described above in combination with specific embodiments. However, advantages, superiorities, and effects mentioned in the present disclosure are merely examples rather than limitations, and it cannot be considered that these advantages, superiorities, and effects are necessary for the embodiments of the present disclosure. In addition, the specific details disclosed above are merely for examples and for ease of understanding, rather than for limitations. The details described above do not limit the present disclosure to necessarily adopting the foregoing specific details for implementation.

A person skilled in the art may make various modifications and variations to the present disclosure without departing from the spirit and the scope of the present disclosure. In this way, if these modifications and variations of the present disclosure fall within the scope of the claims and equivalent technologies of the claims of the present disclosure, the present disclosure also intends to include these modifications and variations.

## Claims

1. A processor scheduling method, applied to an integrated circuit, the integrated circuit being configured to run a plurality of operating systems and comprising a plurality of processors that have an identical processor architecture, wherein the method comprises:
in response to a first operating system being started, obtaining (S210) running configuration information corresponding to the integrated circuit, wherein the first operating system is any one of the plurality of operating systems, and the running configuration information comprises correspondence relationships between the plurality of processors and the plurality of operating systems, the correspondence relationships being determined based on functional safety levels respectively corresponding to the plurality of processors and respective functional safety level requirements of the plurality of operating systems;
determining (S220), based on the correspondence relationships between the plurality of processors and the plurality of operating systems, at least one first processor corresponding to the first operating system from the plurality of processors; and
scheduling (S230) the at least one first processor to the first operating system.

2. The method according to claim 1, wherein after the scheduling (S230) the at least one first processor to the first operating system, the method further comprises:
determining (S240) a current running scenario of the integrated circuit from a plurality of preset running scenarios;
determining (S250), from the plurality of operating systems, a second operating system and a third operating system corresponding to the current running scenario, wherein the second operating system is an operating system for which corresponding processors can be reduced, and the third operating system is an operating system for which corresponding processors are increased; and
scheduling (S260) at least one processor corresponding to the second operating system to the third operating system.

3. The method according to claim 2, wherein the scheduling (S260) at least one processor corresponding to the second operating system to the third operating system comprises:
determining (S261) a system load corresponding to the second operating system, wherein the system load is a total computing-power occupancy ratio of the processors corresponding to the second operating system under the current running scenario;
determining (S262), based on the system load corresponding to the second operating system and the functional safety level requirement of the third operating system, at least one second processor matching the functional safety level requirement of the third operating system from the processors corresponding to the second operating system; and
scheduling (S263) the at least one second processor to the third operating system.

4. The method according to claim 3, wherein the determining (S262), based on the system load corresponding to the second operating system and the functional safety level requirement of the third operating system, at least one second processor matching the functional safety level requirement of the third operating system from the processors corresponding to the second operating system comprises:
in a case where the system load corresponding to the second operating system is less than or equal to a preset first threshold, determining (S2621) a functional safety level matching the functional safety level requirement of the third operating system from the functional safety levels respectively corresponding to a plurality of processors corresponding to the second operating system; and
determining (S2622) at least one second processor from the plurality of processors corresponding to the second operating system based on the functional safety level matching the functional safety level requirement of the third operating system.

5. The method according to claim 4, wherein in the case where the system load corresponding to the second operating system is less than or equal to the preset first threshold, the method further comprises:
in response to none of the functional safety levels respectively corresponding to the plurality of processors corresponding to the second operating system matching the functional safety level requirement of the third operating system, determining (S2623) at least one third processor from the processors corresponding to the second operating system based on the functional safety level requirement of the second operating system and the functional safety level requirement of the third operating system; and
scheduling (S2624) the at least one third processor to the third operating system.

6. The method according to claim 5, wherein the determining (S2623) at least one third processor from the processors corresponding to the second operating system based on the functional safety level requirement of the second operating system and the functional safety level requirement of the third operating system comprises:
generating (S26231) a first scheduling priority in response to the functional safety level requirement of the second operating system being higher than that of the third operating system, wherein the first scheduling priority is used to indicate scheduling of a processor that corresponds to the second operating system and has a functional safety level higher than the functional safety level requirement of the third operating system in an ascending order of functional safety levels; and
determining (S26232), based on the first scheduling priority, a third processor whose functional safety level is higher than the functional safety level requirement of the third operating system from the processors corresponding to the second operating system.

7. The method according to claim 5, wherein the determining (S2623) at least one third processor from the processors corresponding to the second operating system based on the functional safety level requirement of the second operating system and the functional safety level requirement of the third operating system comprises:
generating (S26233) a second scheduling priority in response to the functional safety level requirement of the second operating system being lower than that of the third operating system, wherein the second scheduling priority is used to indicate scheduling of a processor that corresponds to the second operating system and has a functional safety level lower than the functional safety level requirement of the third operating system in a descending order of functional safety levels; and
determining (S26234), based on the second scheduling priority, a third processor whose functional safety level is lower than the functional safety level requirement of the third operating system from the processors corresponding to the second operating system.

8. The method according to claim 1, wherein the plurality of operating systems comprise an intelligent-driving operating system, an instrument-cluster operating system, and a cockpit operating system; and
the functional safety level requirement of the intelligent-driving operating system is higher than that of the instrument-cluster operating system, and the functional safety level requirement of the instrument-cluster operating system is higher than that of the cockpit operating system.

9. A processor scheduling apparatus, applied to an integrated circuit, the integrated circuit being configured to run a plurality of operating systems and comprising a plurality of processors that have an identical processor architecture, wherein the apparatus comprises:
an obtaining module (910), configured to, in response to a first operating system being started, obtain running configuration information corresponding to the integrated circuit, wherein the first operating system is any one of the plurality of operating systems, and the running configuration information comprises correspondence relationships between the plurality of processors and the plurality of operating systems, the correspondence relationships being determined based on functional safety levels respectively corresponding to the plurality of processors and respective functional safety level requirements of the plurality of operating systems;
a determining module (920), configured to determine, based on the correspondence relationships between the plurality of processors and the plurality of operating systems, at least one first processor corresponding to the first operating system from the plurality of processors; and
a scheduling module (930), configured to schedule the at least one first processor to the first operating system.

10. The processor scheduling apparatus according to claim 9, wherein the determining module (920) is further configured to determine a current running scenario of the integrated circuit from a plurality of preset running scenarios; and determine, from the plurality of operating systems, a second operating system and a third operating system corresponding to the current running scenario, wherein the second operating system is an operating system for which corresponding processors can be reduced, and the third operating system is an operating system for which corresponding processors are increased; and
the scheduling module (930) is further configured to schedule at least one processor corresponding to the second operating system to the third operating system.

11. The processor scheduling apparatus according to claim 10, wherein the determining module (920) is configured to determine a system load corresponding to the second operating system, wherein the system load is a total computing-power occupancy ratio of the processors corresponding to the second operating system under the current running scenario; and determine, based on the system load corresponding to the second operating system and the functional safety level requirement of the third operating system, at least one second processor matching the functional safety level requirement of the third operating system from the processors corresponding to the second operating system; and
the scheduling module (930) is configured to schedule the at least one second processor to the third operating system.

12. The processor scheduling apparatus according to claim 11, wherein the determining module (920) is configured to, in a case where the system load corresponding to the second operating system is less than or equal to a preset first threshold, determine a functional safety level matching the functional safety level requirement of the third operating system from the functional safety levels respectively corresponding to a plurality of processors corresponding to the second operating system; and determine at least one second processor from the plurality of processors corresponding to the second operating system based on the functional safety level matching the functional safety level requirement of the third operating system.

13. The processor scheduling apparatus according to claim 12, wherein the determining module (920) is configured to, in response to none of the functional safety levels respectively corresponding to the plurality of processors corresponding to the second operating system matching the functional safety level requirement of the third operating system, determine at least one third processor from the processors corresponding to the second operating system based on the functional safety level requirement of the second operating system and the functional safety level requirement of the third operating system; and
the scheduling module (930) is configured to schedule the at least one third processor to the third operating system.

14. A computer readable storage medium, wherein the storage medium stores a computer program, and the computer program is executed by a processor to implement the processor scheduling method according to any one of claims 1 to 8.

15. An electronic device (1000), comprising:
a processor (1001); and
a memory (1002), configured to store instructions executable by the processor (1001), wherein
the processor (1001) is configured to read the executable instructions from the memory (1002), and execute the instructions to implement the processor scheduling method according to any one of claims 1 to 8.
